# FASCICULE DE BREVET EUROPEEN

(11) **EP 4 341 540 B1**
(45) Date de publication et mention de la délivrance du brevet: **01.07.2026**
(21) Numéro de dépôt: 22727375.2
(22) Date de dépôt: 10.05.2022
(51) Int. Cl.: F02C 7/052, F04F 5/16, F04F 5/46

(54) **DISPOSITIF D'ENTRAÎNEMENT D'UN FLUX D'AIR PRINCIPAL POUR UNE TURBOMACHINE D'AÉRONEF**
VORRICHTUNG ZUR FÜHRUNG EINES HAUPTLUFTSTROMS FÜR EIN FLUGZEUGTURBINENTRIEBWERK
DEVICE FOR GUIDING A MAIN AIR FLOW FOR AN AIRCRAFT TURBINE ENGINE

(30) Priorité: 18.05.2021 FR 2105151
(43) Date de publication de la demande: 27.03.2024
(73) Titulaire: Safran Helicopter Engines, 64510 Bordes (FR)
(72) Inventeur: GUERIN, Thomas Alexandre, 77550 MOISSY-CRAMAYEL (FR); BORELLE, Sylvain, 77550 MOISSY-CRAMAYEL (FR); DEMOLIS, Jacques Lucien, 77550 MOISSY-CRAMAYEL (FR); LEMOUSSU, Nicolas Guillermo, 77550 MOISSY-CRAMAYEL (FR)
(74) Mandataire: Gevers & Orès
(86) Numéro de dépôt international: PCT/FR2022/050887
(87) Numéro de publication internationale: WO 2022/243622

(56) Documents cités:
- FR-A1- 2 541 390
- FR-A1- 3 006 998
- US-A- 3 694 107
- US-A- 4 928 480
- US-A1- 2021 003 095

## Description

### Domaine technique de l'invention

La présente invention concerne un dispositif d'entraînement d'un flux d'air principal par un flux d'air secondaire, ce dispositif étant destiné à équiper une turbomachine d'aéronef.

### Arrière-plan technique

L'arrière-plan technique comprend notamment les documents FR-A1-3 006 998, US-A-3,694,107, FR-A1-2 541 390, US-A-4,928,480 et US-A1-2021/003 095.

Il est connu d'entraîner un flux d'air principal par l'intermédiaire d'un flux d'air secondaire plus énergétique que le flux d'air principal. Un dispositif d'entraînement d'un flux d'air principal de ce type comprend classiquement une conduite d'écoulement d'un flux d'air principal et des éjecteurs d'un flux d'air secondaire situés à l'intérieur de la conduite et configurés pour éjecter le flux d'air secondaire qui forcera l'écoulement du flux d'air principal par entrainement visqueux dans cette conduite.

Les éjecteurs, aussi appelés trompes à jet, sont alimentés avec de l'air à haute pression et/ou haute température. La différence de quantité de mouvement entre les deux flux génère un entrainement visqueux du flux d'air principal à plus basse pression et donc son aspiration dans la conduite. Les documents suivants de l'art antérieur décrivent plusieurs applications de ce type de dispositif : WO-A1-2014/060656, FR-A1-3 011 583, FR-A1-3 022 588 et FR-A1-3 087 239.

Une des problématiques de ce type de dispositif concerne la maîtrise des turbulences et des pertes de charge en sortie des éjecteurs, qui réduisent les performances du dispositif et peuvent obliger à le surdimensionner pour une application donnée. Cela joue ensuite sur l'équilibre des pressions entre l'amont du flux primaire, le flux secondaire et l'aval de l'échappement du système.

Lorsque la pression en amont du dispositif diminue et/ou que les pertes de charge et les turbulences sont trop importantes en sortie des éjecteurs, l'effet d'aspiration généré perd de son efficacité. A un certain seuil de pertes de pression en amont du système générées par le dispositif d'admission, le flux d'air principal s'inverse et le flux d'air secondaire est ré-aspiré vers l'amont, ce qui peut endommager les pièces dans cette zone.

L'invention propose un perfectionnement à cette technologie à travers l'échappement du système qui a pour effet de mieux canaliser les jets des éjecteurs permettant de réduire les turbulences et pertes de charge en sortie de ceux-ci, le rendant ainsi plus robuste aux pertes de pression en amont du système.

### Résumé de l'invention

L'invention concerne un dispositif d'entraînement d'un flux d'air principal pour une turbomachine d'aéronef, ce dispositif comportant :
- une première conduite d'écoulement d'un flux d'air principal, cette première conduite présentant un axe principal,
- une pluralité d'éjecteurs d'un flux d'air secondaire situés à l'intérieur de la première conduite et configurés pour éjecter un flux d'air secondaire et forcer l'écoulement du flux d'air principal dans cette première conduite, lesdits éjecteurs étant répartis autour dudit axe principal sur une paroi tubulaire d'une extrémité de la première conduite, et
- une seconde conduite d'échappement située en sortie des éjecteurs et comportant une extrémité qui est raccordée à l'extrémité de la première conduite et qui reçoit directement ledit flux secondaire pour forcer l'écoulement du flux d'air principal depuis la première conduite jusqu'à la seconde conduite,
caractérisé en ce que l'extrémité de la seconde conduite est engagée dans l'extrémité de la première conduite et comprend une striction qui est au moins en partie située dans cette extrémité de la première conduite.

Les inventeurs ont démontré que le centre de la conduite d'échappement est propice aux recirculations aérodynamiques et aux ré-aspirations de fluide conduisant, après un certain seuil de perte de pression en amont du système, à une inversion des flux.

Plutôt que de combler le centre de cette conduite, les inventeurs proposent de forcer les flux primaire et secondaire au centre de la conduite. Pour cela, la conduite d'échappement comprend une striction.

Dans la présente demande, on entend par « striction », un rétrécissement transversal de la seconde conduite qui entraîne une réduction de sa section de passage. Une striction se caractérise donc par un étranglement de la conduite et est régulier sur toute la périphérie de la conduite. Le but est de canaliser les flux primaire et secondaire pour qu'ils passent à travers une section restreinte, ce qui limite le risque d'apparition de turbulences et de recirculations dans cette zone.

Le dispositif selon l'invention peut comprendre une ou plusieurs des caractéristiques suivantes, prises isolément les unes des autres, ou en combinaison les unes avec les autres :
-- les éjecteurs sont au moins au nombre de trois et de préférence au moins cinq ;
   - ladite striction représente une réduction de la section de passage comprise entre 10 et 90%, de préférence entre 30 et 70%, et plus préférentiellement de l'ordre de 50% ;
   - ladite striction comprend :
      -- un tronçon intermédiaire comportant une section de passage Smin,
      -- un tronçon amont comportant à une extrémité amont une section de passage Smax ou Smax1 sensiblement identique à la section de passage de la première conduite, et à une extrémité aval une section de passage Smin qui est inférieure à Smax, et
      -- un tronçon aval situé entre le tronçon intermédiaire et le reste de la seconde conduite, ce tronçon aval comportant à une extrémité amont une section de passage Smin, et à une extrémité aval une section de passage Smax sensiblement identique à la section de passage de la première conduite ou une section de passage Smax2 comprise entre Smin et Smax1, et dans lequel le tronçon amont a une longueur L1 ou dimension axiale inférieure ou égale à une longueur L2 ou dimension axiale du tronçon aval ;
   - L2 = K.L1 avec K compris entre 1 et 10, et de préférence entre 3 et 5 ;
   - l'extrémité de la seconde conduite comprend un bord périphérique qui affleure la paroi tubulaire de la première conduite ;
   - l'extrémité de la seconde conduite comprend un bord périphérique qui s'étend dans un plan perpendiculaire audit axe principal, ledit plan passant par des sorties des éjecteurs ou en amont de ces sorties ;
   - ledit plan passe en amont de ces sorties et ledit bord périphérique comprend des encoches configurées pour recevoir chacune une base d'un desdits éjecteurs ;
   - ladite seconde conduite a une forme générale droite ou coudée ;
   - ladite seconde conduite a une section de passage de forme générale non circulaire ; en variante, cette section peut être circulaire ;
   - ladite seconde conduite est formée d'une seule pièce, de préférence en métal.

L'invention concerne en outre une turbomachine, en particulier d'aéronef, comportant un dispositif tel que décrit ci-dessus.

L'invention concerne en outre un hélicoptère comportant un dispositif ou une turbomachine tel que décrit ci-dessus.

Avantageusement, la turbomachine comprend, d'amont en aval, dans le sens d'écoulement des gaz dans la turbomachine, une entrée d'air, au moins un compresseur, une chambre de combustion, au moins une turbine et un échappement, ladite entrée d'air étant équipé d'un piège à particules qui est raccordé audit dispositif.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue très schématique d'un dispositif d'entraînement d'un flux d'air principal pour une turbomachine d'aéronef ;
[Fig.2] la figure 2 est une vue schématique en coupe axiale d'une turbomachine d'aéronef équipée d'un dispositif du type de celui de la figure 1 ;
[Fig.3] la figure 3 est une vue schématique en perspective et en coupe axiale d'un dispositif d'entraînement d'un flux d'air principal, selon la technique antérieure à la présente invention ;
[Fig.4] la figure 4 est une vue schématique en perspective d'un dispositif d'entraînement d'un flux d'air principal, selon un mode de réalisation de l'invention ;
[Fig.5] la figure 5 est une vue à plus grande échelle d'une partie du dispositif de la figure 4 ; et
[Fig.6] la figure 6 est une vue en coupe selon la ligne VI-VI de la figure 4.

### Description détaillée de l'invention

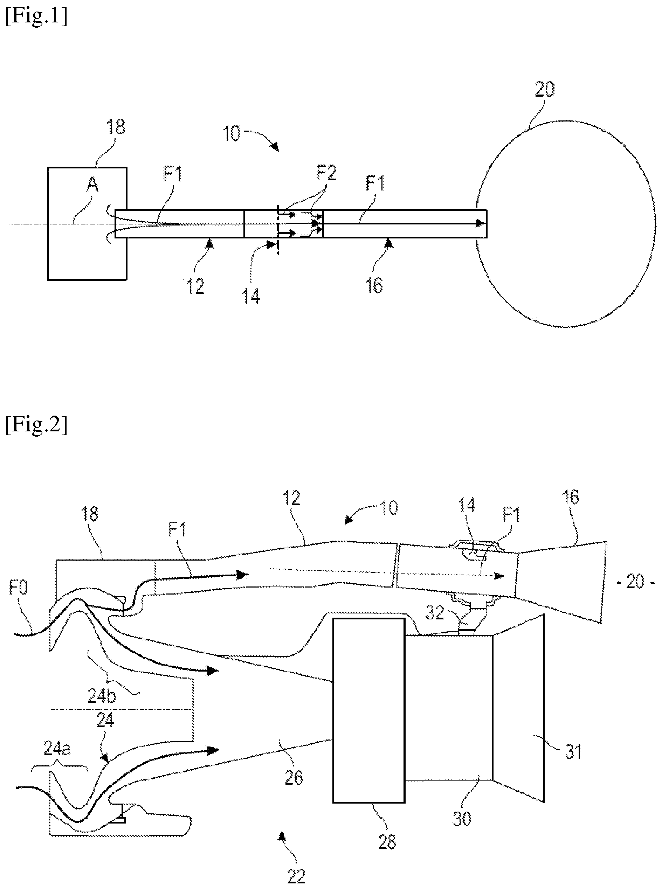

La figure 1 est une représentation très schématique d'un dispositif 10 d'entraînement d'un flux d'air principal F1 par un flux d'air secondaire F2 pour une turbomachine d'aéronef.

Le dispositif 10 comporte :
- une première conduite 12 d'écoulement du flux d'air principal F1, cette première conduite présentant un axe principal A,
- une pluralité d'éjecteurs 14 du flux d'air secondaire F2, qui sont situés à l'intérieur de la première conduite 12 et configurés pour éjecter le flux d'air secondaire F2 et forcer l'écoulement du flux d'air principal F1 dans la première conduite 12, et
- une seconde conduite 16 d'échappement située en sortie des éjecteurs 14 et raccordée à la première conduite 12.

Le dispositif 10 est en général raccordé en amont (par référence à l'écoulement des flux F1, F2 dans le dispositif 10) à une enceinte 18, telle qu'une enceinte à purger ou une enceinte formant un piège à particules, de la turbomachine d'aéronef.

Le dispositif 10 est en général raccordé en aval à l'extérieur 20 de la turbomachine.

La première conduite 12 a une forme générale allongée et rectiligne bien que cela ne soit pas limitatif. De la même façon, la seconde conduite 16 a une forme générale allongée et rectiligne mais peut être coudée en variante.

Les éjecteurs 14 sont raccordés à une source d'alimentation en air à haute pression et/ou haute température et génèrent un flux d'air secondaire F2 dans la première conduite 12 qui entraîne par frottement visqueux un écoulement du flux principal F1 dans la conduite 12. Les flux F1, F2 s'écoulent alors dans la seconde conduite 16 jusqu'à l'extérieur 20 de la turbomachine.

La technologie de ce type d'éjecteur ou trompe à jet est bien connue de l'homme du métier et n'a donc pas besoin d'être détaillée.

La figure 2 illustre un exemple d'implantation d'un dispositif 10 dans une turbomachine 22 ici d'un aéronef du type hélicoptère.

La turbomachine 22 comprend classiquement, d'amont en aval, une entrée d'air 24, au moins un compresseur 26, une chambre de combustion 28, au moins une turbine 30 et un échappement 31.

L'entrée d'air 24 a une forme annulaire et comprend une portion amont 24a de forme tronconique qui est évasée vers l'aval, et une portion aval 24b de forme tronconique qui est au contraire évasée vers l'amont. Autrement dit, l'entrée d'air 24 a, à la jonction entre ces portions 24a, 24b, un diamètre maximal.

Le flux d'air F0 qui pénètre dans l'entrée d'air 24 s'écoule donc d'abord radialement de l'intérieur vers l'extérieur dans la première portion 24a de l'entrée d'air 24, puis radialement de l'extérieur vers l'intérieur dans la seconde portion 24b et jusqu'au compresseur 26. Lors de l'écoulement du flux d'air F0 dans la première portion 24a, les particules potentiellement présentes dans ce flux d'air sont acheminées par inertie dans l'enceinte 18 qui est raccordée à la périphérie externe de l'entrée d'air 24.

Le dispositif 10 s'étend le long et sur un côté de la turbomachine 22. Dans l'exemple représenté, la première conduite 12 s'étend depuis l'enceinte 18 et l'entrée d'air 24 jusqu'à l'échappement 31. Les éjecteurs 14 sont montés dans la première conduite 12 au niveau de la turbine 30 et sont alimentés en air sous pression et/ou température prélevé directement sur la turbine 30 par des moyens de prélèvement 32 adéquats. La seconde conduite 16 s'étend en aval de la première conduite 12 et de la turbine 30 et par exemple au niveau d'un échappement 31 par exemple sous forme de tuyère de sortie des gaz d'échappement.

Le dispositif 10 de la figure 2 est donc associé à une enceinte 18 et une entrée d'air 24a formant un piège à particules à l'entrée de la turbomachine 22.

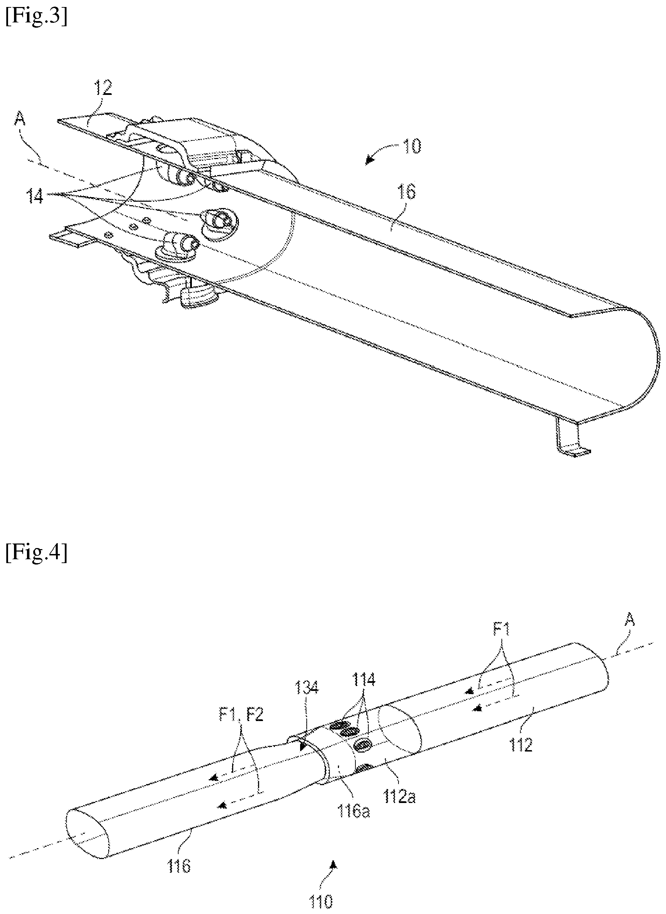

La figure 3 illustre un dispositif 10 selon la technique antérieure. On constate que la seconde conduite 16 est formée par une paroi tubulaire qui a une section de passage constante sur toute son étendue axiale. On constate en outre que les éjecteurs 14 sont répartis autour de l'axe A de la première conduite 12. Cette technologie n'est pas satisfaisante à cause des turbulences et pertes de charge qui apparaissent en fonctionnement en sortie des éjecteurs, comme évoqué dans ce qui précède la rendant très sensible aux pertes de pression en amont du système conduisant à une ré-aspiration des flux primaire et secondaire.

La présente invention propose une solution à ce problème avec un dispositif 110 dont un mode de réalisation est représenté aux figures 4 à 6.

Le dispositif 110 comprend :
- une première conduite 112 d'écoulement du flux d'air principal F1, cette première conduite 112 présentant un axe principal A,
- une pluralité d'éjecteurs 114 du flux d'air secondaire F2, qui sont situés à l'intérieur de la première conduite 112 et configurés pour éjecter le flux d'air secondaire F2 et forcer l'écoulement du flux d'air principal F1 dans la première conduite 112, et
- une seconde conduite 116 d'échappement située en sortie des éjecteurs 114 et raccordée à la première conduite 112.

La première conduite 112 a une forme générale tubulaire et peut être droite ou coudée. Elle comprend une extrémité longitudinale 112a dans laquelle sont situés les éjecteurs 114 et qui comprend un bord périphérique 112b libre.

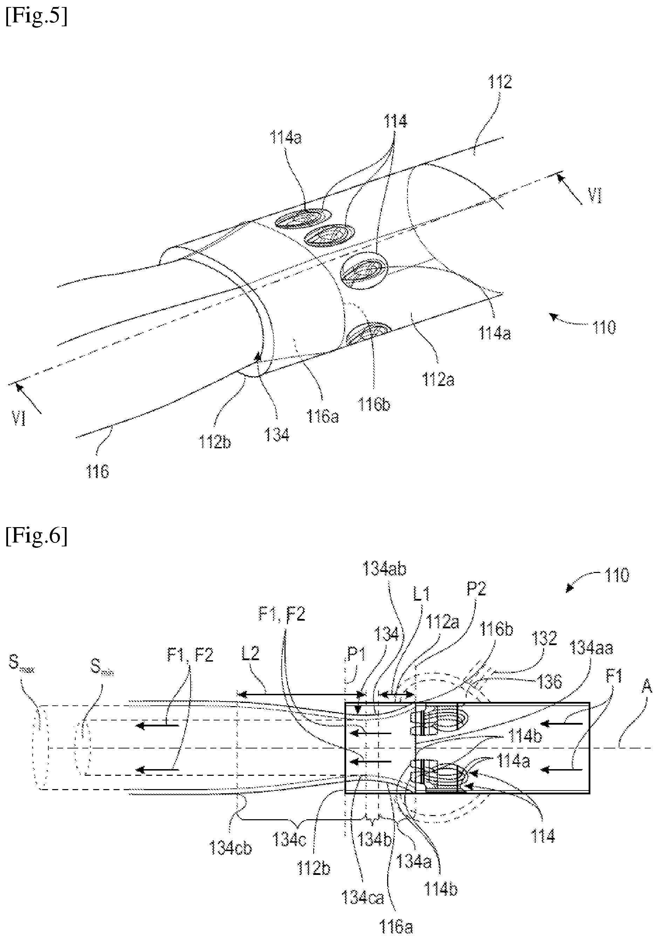

Les éjecteurs 114 sont situés dans la première conduite 112, à proximité de ce bord périphérique 112b, et ont chacun une forme générale coudée dans l'exemple représenté. Chaque éjecteur 114 est tubulaire et comprend une extrémité 114a raccordée à un orifice (non visible) traversant de la conduite 112, et une extrémité 114b opposée qui est rétrécie pour former une buse et qui est orientée dans une direction parallèle à l'axe A et vers le bord périphérique 112b (figure 6).

Les extrémités 114a des éjecteurs 114 sont reliées par l'intermédiaire des orifices précités de la conduite 112 à un collecteur annulaire 136 qui est monté autour de la conduite 112 et qui est raccordé à des moyens de prélèvement 132 (figure 6) comparables aux moyens de prélèvement 32 précités.

La seconde conduite 116 comporte une extrémité 116a qui est raccordée à l'extrémité 112a de la première conduite 112 et qui reçoit directement le flux secondaire F2 pour forcer l'écoulement du flux d'air principal F1 depuis la première conduite 112 jusqu'à la seconde conduite 116.

Selon l'invention, l'extrémité 116a de la seconde conduite 116 comprend une striction 134, c'est-à-dire une réduction de sa section de passage. La striction 134 permet de bien canaliser l'écoulement des flux primaire F1 et secondaire F2, supprimant ainsi les risques de turbulences et de recirculations dans cette zone.

La réduction de passage de la striction 134 est de l'ordre de 10 et 90%, de préférence entre 30 et 70%, et plus préférentiellement de l'ordre de 50%. Dans l'exemple représenté (figure 6), la striction 134 comprend trois parties ou tronçons à savoir :
- un tronçon intermédiaire 134b comportant une section de passage Smin,
- un tronçon amont 134a situé entre le tronçon intermédiaire 134b et les éjecteurs 114, ce tronçon amont 134a comportant à une extrémité amont 134aa une section de passage Smax sensiblement identique à la section de passage de la première conduite 112, et à une extrémité aval 134ab une section de passage Smin qui est inférieure à Smax, et
- un tronçon aval 134c situé entre le tronçon intermédiaire 134b et le reste de la seconde conduite 116, ce tronçon aval 134c comportant à une extrémité amont 134ca une section de passage Smin, et à une extrémité aval 134cb une section de passage Smax sensiblement identique à la section de passage de la première conduite 112.

Le tronçon amont 134a a une longueur L1 ou dimension axiale inférieure à une longueur L2 ou dimension axiale du tronçon aval 134c. L2 = K.L1 avec K compris entre 1 et 10, et de préférence entre 3 et 5.

Dans l'exemple représenté, l'extrémité 116a de la seconde conduite 116 est engagée dans l'extrémité 112a de la première conduite 112. La longueur d'engagement est ici supérieure à L1. L'extrémité 112a entoure les tronçons 134a, 134b voire une partie du tronçon 134c.

Le bord périphérique 112b de la première conduite 112 est situé dans un plan P1 qui est perpendiculaire à l'axe A et passe sensiblement par le tronçon aval 134c.

L'extrémité 116a de la seconde conduite 116 comprend un bord périphérique 116b qui s'étend dans un plan P2 qui est perpendiculaire à l'axe A et passe sensiblement par les extrémités 114b ou sorties des éjecteurs 114 ou en amont de ces sorties (figure 6).

La seconde conduite 116 est de préférence réalisée d'une seule pièce, par exemple par fabrication additive. La conduite 116 est par exemple réalisée en métal. Elle a une forme générale droite dans l'exemple représenté et une section de passage de forme générale non circulaire. Cette forme est aplatie et par exemple ovale ou elliptique.

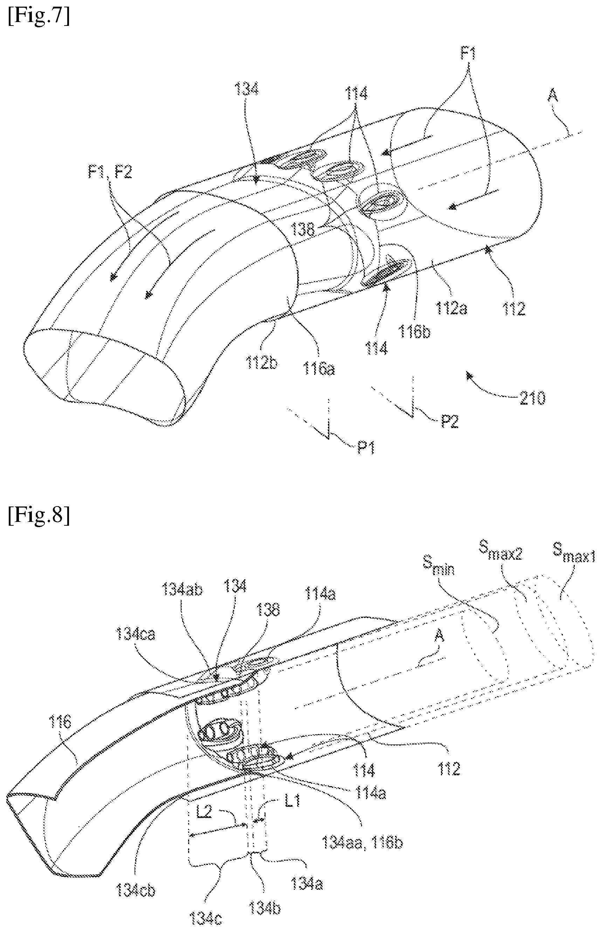

Les figures 7 et 8 illustrent une variante de réalisation du dispositif 110 selon l'invention.

Le dispositif 210 des figures 7 et 8 présentent de nombreuses similitudes au dispositif 110 des figures 4 à 6.

La description qui précède faite en relation avec le dispositif 110 s'applique donc au dispositif 210, dans la mesure où elle n'est pas contraire et ne contredit pas ce qui suit.

La conduite 112 et les éjecteurs 116 associés au dispositif 210 sont similaires à ceux décrits dans ce qui précède.

La seconde conduite 116 a une forme générale coudée dans l'exemple représenté et une section de passage de forme générale non circulaire. Cette forme est aplatie et par exemple ovale ou elliptique.

La striction 134 comprend trois parties ou tronçons à savoir :
- un tronçon intermédiaire 134b comportant une section de passage Smin,
- un tronçon amont 134a situé entre le tronçon intermédiaire 134b et les éjecteurs 114, ce tronçon amont 134a comportant à une extrémité amont 134aa une section de passage Smax1 sensiblement identique à la section de passage de la première conduite 112, et à une extrémité aval 134ab une section de passage Smin qui est inférieure à Smax, et
- un tronçon aval 134c situé entre le tronçon intermédiaire 134b et le reste de la seconde conduite 116, ce tronçon aval 134b comportant à une extrémité amont 134ba une section de passage Smin, et à une extrémité aval 134bb une section de passage Smax2 comprise entre Smin et Smax1. L'extrémité 116a de la seconde conduite 116, qui est engagée dans l'extrémité 112a de la première conduite 112, comprend un bord périphérique 116b qui s'étend dans un plan P2 qui est perpendiculaire à l'axe A et passe en amont des extrémités 114b ou sorties des éjecteurs 114 (figure 8).

Ce bord périphérique 116b ou le tronçon amont 134a comprend des encoches 138, ici en forme de C ou U, qui sont réparties autour de l'axe A. Le nombre d'encoches 138 est égal au nombre d'éjecteurs 114 et sont positionnées autour de l'axe A en fonction de la position des éjecteurs 114 autour de l'axe A de façon à ce que les bases des éjecteurs 114, c'est-à-dire leurs extrémités 114a, soient au moins en partie encastrées ou engagées dans ces encoches 138.

L'invention propose ainsi un dispositif 110, 210 d'entraînement d'un flux d'air principal pour une turbomachine d'aéronef, dans lequel la conduite d'échappement 116 comprend une striction 134 au niveau des sorties des éjecteurs d'un flux d'air secondaire.

## Revendications

1. Dispositif (110, 210) d'entraînement d'un flux d'air principal (F1) pour une turbomachine (22) d'aéronef, ce dispositif comportant :
- une première conduite (112) d'écoulement d'un flux d'air principal (F1), cette première conduite présentant un axe principal (A),
- une pluralité d'éjecteurs (114) d'un flux d'air secondaire (F2) situés à l'intérieur de la première conduite (112) et configurés pour éjecter un flux d'air secondaire (F2) et forcer l'écoulement du flux d'air principal (F1) dans cette première conduite (112), lesdits éjecteurs (114) étant répartis autour dudit axe principal (A) sur une paroi tubulaire d'une extrémité (112a) de la première conduite (112), et
- une seconde conduite (116) d'échappement située en sortie des éjecteurs (114) et comportant une extrémité (116a) qui est raccordée à l'extrémité (112a) de la première conduite (112) et qui reçoit directement ledit flux secondaire (F2) pour forcer l'écoulement du flux d'air principal (F1) depuis la première conduite (112) jusqu'à la seconde conduite (116),
**caractérisé en ce que** l'extrémité de la seconde conduite (116) est engagée dans l'extrémité (112a) de la première conduite (112) et comprend une striction (134) qui est au moins en partie située dans cette extrémité (112a) de la première conduite (112).

2. Dispositif (110, 210) selon la revendication 1, dans lequel ladite striction (134) représente une réduction de la section de passage comprise entre 10 et 90%, de préférence entre 30 et 70%, et plus préférentiellement de l'ordre de 50%.

3. Dispositif (110, 210) selon la revendication 1 ou 2, dans lequel ladite striction (134) comprend :
- un tronçon intermédiaire (134b) comportant une section de passage Smin,
- un tronçon amont (134a) situé entre le tronçon intermédiaire et les éjecteurs (114), ce tronçon amont (134a) comportant à une extrémité amont (134aa) une section de passage Smax ou Smax1 sensiblement identique à la section de passage de la première conduite, et à une extrémité aval (134ab) une section de passage Smin qui est inférieure à Smax, et
- un tronçon aval (134c) situé entre le tronçon intermédiaire (134b) et le reste de la seconde conduite, ce tronçon aval (134c) comportant à une extrémité amont (134ca) une section de passage Smin, et à une extrémité aval (134cb) une section de passage Smax sensiblement identique à la section de passage de la première conduite (112) ou une section de passage Smax2 comprise entre Smin et Smax1,
et dans lequel le tronçon amont (134a) a une longueur L1 ou dimension axiale inférieure ou égale à une longueur L2 ou dimension axiale du tronçon aval (134c).

4. Dispositif (110, 210) selon la revendication précédente, dans lequel L2 = K.L1 avec K compris entre 1 et 10, et de préférence entre 3 et 5.

5. Dispositif (110, 210) selon la revendication 3 ou 4, dans lequel le tronçon intermédiaire (134b) est situé dans l'extrémité (112a) de la première conduite (112).

6. Dispositif (110, 210) selon l'une des revendications précédentes, dans lequel l'extrémité (116a) de la seconde conduite (116) comprend un bord périphérique (116b) qui affleure la paroi tubulaire de l'extrémité (112a) de la première conduite (112).

7. Dispositif (110, 210) selon l'une des revendications précédentes, dans lequel l'extrémité (116a) de la seconde conduite (116) comprend un bord périphérique (116b) qui s'étend dans un plan perpendiculaire audit axe principal (A), ledit plan passant par des sorties des éjecteurs (114) ou en amont de ces sorties.

8. Dispositif (210) selon la revendication précédente, dans lequel ledit plan passe en amont de ces sorties et ledit bord périphérique (116b) comprend des encoches (138) configurées pour recevoir chacune une base d'un desdits éjecteurs (114).

9. Dispositif (110, 210) selon l'une des revendications précédentes, dans lequel ladite seconde conduite (116) a une forme générale droite ou coudée.

10. Dispositif (110, 210) selon l'une des revendications précédentes, dans lequel ladite seconde conduite (116) a une section de passage de forme générale non circulaire.

11. Dispositif (110, 210) selon l'une des revendications précédentes, dans lequel ladite seconde conduite (116) est formée d'une seule pièce, de préférence en métal.

12. Turbomachine (22), en particulier d'aéronef, comportant un dispositif (110, 210) selon l'une des revendications précédentes.

13. Turbomachine (22) selon la revendication 12, dans laquelle elle comprend, d'amont en aval, dans le sens d'écoulement des gaz dans la turbomachine, une entrée d'air (24), au moins un compresseur (26), une chambre de combustion (28), au moins une turbine (30) et un échappement (31), ladite entrée d'air (24) étant équipé d'un piège à particules qui est raccordé audit dispositif (110, 210).

## Patentansprüche

1. Vorrichtung (110, 210) zum Antrieb eines Hauptluftstroms (F1) für ein Turbotriebwerk (22) eines Luftfahrzeugs, wobei diese Vorrichtung Folgendes umfasst:
- eine erste Leitung (112) zum Durchfluss eines Hauptluftstroms (F1), wobei diese erste Leitung eine Hauptachse (A) aufweist,
- eine Vielzahl von Ejektoren (114) eines sekundären Luftstroms (F2), die sich im Inneren der ersten Leitung (112) befinden und konfiguriert sind, um einen sekundären Luftstrom (F2) auszustoßen und die Strömung des Hauptluftstroms (F1) in dieser ersten Leitung (112) zu erzwingen, wobei die Ejektoren (114) auf einer Rohrwand eines Endes (112a) der ersten Leitung (112) um die Hauptachse (A) herum verteilt sind, und
- eine zweite Leitung (116) zum Auslass, die sich am Ausgang der Ejektoren (114) befindet und ein Ende (116a) umfasst, das mit dem Ende (112a) der ersten Leitung (112) verbunden ist und das den sekundären Strom (F2) direkt aufnimmt, um den Durchfluss des Hauptluftstroms (F1) von der ersten Leitung (112) bis zu der zweiten Leitung (116) zu erzwingen,
**dadurch gekennzeichnet, dass** das Ende der zweiten Leitung (116) in dem Ende (112a) der ersten Leitung (112) in Eingriff vorliegt und eine Verengung (134) beinhaltet, die sich mindestens zum Teil in diesem Ende (112a) der ersten Leitung (112) befindet.

2. Vorrichtung (110, 210) nach Anspruch 1, wobei die Verengung (134) eine Verminderung des Durchtrittsquerschnitts zwischen 10 und 90 %, vorzugsweise zwischen 30 und 70 % und bevorzugter in der Größenordnung von 50 % darstellt.

3. Vorrichtung (110, 210) nach Anspruch 1 oder 2, wobei die Verengung (134) Folgendes beinhaltet:
- einen Zwischenabschnitt (134b), der einen Durchtrittsquerschnitt Smin umfasst,
- einen vorgelagerten Abschnitt (134a), der sich zwischen dem Zwischenabschnitt und den Ejektoren (114) befindet, wobei dieser vorgelagerte Abschnitt (134a) an einem vorgelagerten Ende (134aa) einen Durchtrittsquerschnitt Smax oder Smax1, der im Wesentlichen identisch ist zu dem Durchtrittsquerschnitt der ersten Leitung, und an einem nachgelagerten Ende (134b) einen Durchtrittsquerschnitt Smin umfasst, der kleiner ist als Smax, und
- einen nachgelagerten Abschnitt (134c), der sich zwischen dem Zwischenabschnitt (134b) und dem Rest der zweiten Leitung befindet, wobei dieser nachgelagerte Abschnitt (134c) an einem vorgelagerten Ende (134ca) einen Durchtrittsquerschnitt Smin und an einem nachgelagerten Ende (134cb) einen Durchtrittsquerschnitt Smax umfasst, der im Wesentlichen identisch ist zu dem Durchtrittsquerschnitt der ersten Leitung (112) oder einem Durchtrittsquerschnitt Smax2 zwischen Smin und Smax,
und wobei der vorgelagerte Abschnitt (134a) eine Länge L1 oder axiale Abmessung kleiner als oder gleich einer Länge L2 oder axialen Abmessung des nachgelagerten Abschnitts (134c) aufweist.

4. Vorrichtung (110, 210) nach dem vorstehenden Anspruch, wobei L2 = K.L1 mit K zwischen 1 und 10 und vorzugsweise zwischen 3 und 5.

5. Vorrichtung (110, 210) nach Anspruch 3 oder 4, wobei der Zwischenabschnitt (134b) sich in einem Ende (112a) der ersten Leitung (112) befindet.

6. Vorrichtung (110, 210) nach einem der vorstehenden Ansprüche, wobei das Ende (116a) der zweiten Leitung (116) einen Umfangsrand (116b) beinhaltet, der mit der Rohrwand des Endes (112a) der ersten Leitung (112) bündig ist.

7. Vorrichtung (110, 210) nach einem der vorstehenden Ansprüche, wobei das Ende (116a) der zweiten Leitung (116) einen Umfangsrand (116b) beinhaltet, der sich in einer Ebene senkrecht zur Hauptachse (A) erstreckt, wobei diese Ebene durch die Ausgänge der Ejektoren (114) oder diesen Ausgängen vorgelagert verläuft.

8. Vorrichtung (210) nach dem vorstehenden Anspruch, wobei die Ebene diesen Ausgängen vorgelagert verläuft und der Umfangsrand (116b) Aussparungen (138) beinhaltet, die jeweils konfiguriert sind zum Aufnehmen einer Basis eines der Ejektoren (114).

9. Vorrichtung (110, 210) nach einem der vorstehenden Ansprüche, wobei die zweite Leitung (116) eine allgemein gerade oder gebogene Form aufweist.

10. Vorrichtung (110, 210) nach einem der vorstehenden Ansprüche, wobei die zweite Leitung (116) einen Durchtrittsquerschnitt von allgemein nicht kreisförmiger Form aufweist.

11. Vorrichtung (110, 210) nach einem der vorstehenden Ansprüche, wobei die zweite Leitung (116) aus einem einzigen Werkstück, vorzugsweise aus Metall, gebildet ist.

12. Turbotriebwerk (22), insbesondere eines Luftfahrzeugs, das eine Vorrichtung (110, 210) nach einem der vorstehenden Ansprüche umfasst.

13. Turbotriebwerk (22) nach Anspruch 12, wobei es in der Richtung des Durchflusses der Gase in dem Turbotriebwerk, von vorgelagert nach nachgelagert, einen Lufteintritt (24), mindestens einen Kompressor (26), eine Brennkammer (28), mindestens eine Turbine (30) und einen Auslass (31) beinhaltet, wobei der Lufteintritt (24) mit einer Partikelfalle ausgestattet ist, die mit der Vorrichtung (110, 210) verbunden ist.

## Claims

1. A device (110, 210) for guiding a main air flow (F1) for an aircraft turbine engine (22), this device comprising:
- a first pipe (112) for the flow of a main air flow (F1), this first pipe having a main axis (A),
- a plurality of ejectors (114) of a secondary air flow (F2) located inside the first pipe (112) and configured to eject a secondary air flow (F2) and force the flow of the main air flow (F1) in this first pipe (112), said ejectors (114) being distributed around said main axis (A) on a tubular wall of one end (112a) of the first pipe (112), and
- a second exhaust pipe (116) located at the outlet of the ejectors (114) and comprising an end (116a) which is connected to the end (112a) of the first pipe (112) and which directly receives said secondary flow (F2) to force the flow of the main air flow (F1) from the first pipe (112) to the second pipe (116),
**characterised in that** the end of the second pipe (116) is engaged in the end (112a) of the first pipe (112) and comprises a constriction (134) which is at least partly located in this end (112a) of the first pipe (112).

2. The device (110, 210) according to claim 1, wherein said constriction (134) represents a reduction in the passage cross-section of between 10 and 90%, preferably between 30 and 70%, and more preferably of the order of 50%.

3. The device (110, 210) according to claim 1 or 2, wherein said constriction (134) comprises:
- an intermediate section (134b) comprising a passage cross-section Smin,
- an upstream section (134a) located between the intermediate section and the ejectors (114), this upstream section (134a) comprising at an upstream end (134aa) a passage cross-section Smax or Smax1 substantially identical to the passage cross-section of the first pipe, and at a downstream end (134ab) a passage cross-section Smin which is smaller than Smax, and
- a downstream section (134c) located between the intermediate section (134b) and the rest of the second pipe, this downstream section (134c) comprising, at an upstream end (134ca), a passage cross-section Smin and, at a downstream end (134cb), a passage cross-section Smax substantially identical to the passage cross-section of the first pipe (112) or a passage cross-section Smax2 between Smin and Smax1,
and wherein the upstream section (134a) has a length L1 or axial dimension less than or equal to a length L2 or axial dimension of the downstream section (134c).

4. The device (110, 210) according to the preceding claim, wherein L2 = K.L1 with K between 1 and 10, and preferably between 3 and 5.

5. The device (110, 210) according to claim 3 or 4, wherein the intermediate section (134b) is located in the end (112a) of the first pipe (112).

6. The device (110, 210) according to one of the preceding claims, wherein the end (116a) of the second pipe (116) comprises a peripheral edge (116b) which is flush with the tubular wall of the end (112a) of the first pipe (112).

7. The device (110, 210) according to one of the preceding claims, wherein the end (116a) of the second pipe (116) comprises a peripheral edge (116b) which extends in a plane perpendicular to said main axis (A), said plane passing through outlets of the ejectors (114) or upstream of these outlets.

8. The device (210) according to the preceding claim, wherein said plane passes upstream of these outlets and said peripheral edge (116b) comprises notches (138) configured to each receive a base of one of said ejectors (114).

9. The device (110, 210) according to one of the preceding claims, wherein said second pipe (116) has a generally straight or bent shape.

10. The device (110, 210) according to one of the preceding claims, wherein said second pipe (116) has a generally non-circular passage cross-section.

11. The device (110, 210) according to one of the preceding claims, wherein said second pipe (116) is integrally formed, preferably of metal.

12. A turbine engine (22), in particular for an aircraft, comprising a device (110, 210) according to one of the preceding claims.

13. The turbine engine (22) according to claim 12, wherein it comprises, from upstream to downstream, in the orientation of the gas flow in the turbine engine, an air inlet (24), at least one compressor (26), a combustion chamber (28), at least one turbine (30) and an exhaust (31), said air inlet (24) being equipped with a particulate trap which is connected to said device (110, 210).
